# EUROPEAN PATENT SPECIFICATION

(11) **EP 4 545 824 B1**
(45) Date of publication and mention of the grant of the patent: **05.08.2026**
(21) Application number: 23306861.8
(22) Date of filing: 24.10.2023
(51) Int. Cl.: F16K 1/50, F16K 11/04, F16K 27/02

(54) **VALVE WITH ANTI-ROTATION SYSTEM**
VENTIL MIT VERDREHSICHERUNG
SOUPAPE AVEC SYSTÈME ANTI-ROTATION

(43) Date of publication of application: 30.04.2025
(73) Proprietor: ABB SCHWEIZ AG, 5400 Baden (CH)
(72) Inventor: CAILLOT, Alexandre, 74540 Viuz-La-Chiesaz (FR); LEHONGRE, Matthieu, 38530 Pontcharra (FR)
(74) Representative: De Bortoli, Eros

(56) References cited:
- CN-U- 213 145 376
- DE-U1- 20 101 218
- DE-U1- 29 603 818
- FR-A- 973 477

## Description

### Technical field

The invention that belongs to the technical field of transfer and distribution of fluids and especially liquids, relates to a hydraulic hardware able to establish or impede communication between two pipes at a connection point between said two pipes.

In particular, the invention relates to a valve of a novel type that can be used in all kind of industries where transfer and distribution of liquids of any viscosity are to be done in order to prepare semi-finished or finished products.

To give a few example, the valve of the present invention can be used in liquid-dispensing installations or manifolds, for lubricant, grease, paint, papermaking and chemical industries, but also for pharmaceutical, perfume, food and beverage industries.

Hence, the invention concerns a valve able to occupy at least an open position allowing communication between two pipes in which liquid is intended to flow, and at least a close position impeding communication between said two pipes.

### Background

In many industries, it is necessary to prepare solutions by mixing various basic liquids that are generally conveyed from a set of reservoirs to appropriate reactors by means of an installation comprising a set of pipes. These pipes, that can be of many different sizes, are sometimes connected together in order to let the liquid that flows in a first pipe to enter a second pipe at a connection point between said first and second pipes. The invention relates to a valve that links said first and second pipes together, and that includes a shut-off element able to occupy a open position in which the liquid that flows in the first pipe is able to enter the second pipe, and a close position in which the liquid that flows in the first pipe is prevented from entering the second pipe. In other word, the shut-off element, in its close position, blocks a communication path between the two pipes, while the shut-off element liberates the communication path in its open position.

Due to the nature of the liquids flowing in the pipes of liquid-dispensing installations, it is necessary to clean the pipes on a regular basis in order to remove the dirt and residual quantity of old liquids accumulated at the end of a production process and before starting a new one. It is especially important in the food and beverage industries, but pipe cleaning processes are in fact usually implemented in all industries where liquid-dispensing installations are used.

A difficulty generally met while trying to efficiently cleaning these installations lies in the difficult access to the inside of the pipes that can be of different sizes in terms of diameters and lengths.

In order to efficiently clean the inner walls of the pipes, a known solution is to push and scrape the residual liquid with a scraper also known as pig. A pig is a movable device with at least one external ring for scraping the inner wall of a pipe. During such a cleaning process, known as pigging, the pig or scraper can for example be moved inside the pipe by a fluid under pressure. Such an installation that can be cleaned by such a process are known as a *piggable* installation made of *piggable* pipes.

Another difficulty is met when a pigging process is applied to a pipe installation containing at least one valve, and especially a valve linking two pipes in the way described above.

In order to allow an efficient pigging process of the entire installation, the shut-off element of the valve should be able to occupy at least one position in which at least one scraper accommodated in one of the two pipes can proceed through the valve. This position, usually coinciding with the close position of the shut-off element, is achievable thanks to the shape and structural features of the shut-off element of such a *piggable* valve.

More precisely, the shut-off element generally includes a through-orifice having an internal diameter that corresponds to the internal diameter of the first pipe, and, on its face that faces the second pipe, a protruding portion having an overall contour corresponding to an opening provided into the valve in order to communicate the two pipes, the protruding portion further including an end part provided with a concave cylindrical profile with curvature that equals to that of the internal wall of the second pipe.

Thanks to these structural features, when the shut-off element is in the close position, the through-orifice of the shut-off element coincides, i.e. is axially aligned, with the first pipe and the protruding portion of the shut-off element provides a prolongation of the second pipe.

As one can understand, an even slightly rotation of the shut-off element occupying the close position can have disastrous consequences for the pipes, the scraper or the valve itself during the pigging process.

DE 296 03 818 U1 discloses a valve according to the preamble of claim 1.

### Summary

The invention aims to solve all or some of the above mentioned disadvantages.

As such, a first object of the invention is to provide a new valve for establishing communication between a first pipe and a second pipe of a liquid-dispensing installation or manifold, while ensuring an efficient cleaning process or pigging process.

According to a first aspect of the invention, the object is achieved by a valve for establishing communication between a first pipe and a second pipe, wherein a first pipe axis of the first pipe and a second pipe axis of the second pipe are offset, said valve comprising:
- a stationary body comprising an internal chamber communicating with the first pipe and with the second pipe;
- a shut-off element slidably mounted within the internal chamber of the stationary body, the shut-off element being movable in translation along a translation axis between an open position corresponding to an open position of the valve wherein the first pipe and the second pipe are in communication through the internal chamber and a close position corresponding to a close position of the valve wherein the first pipe and the second pipe are not in communication through the internal chamber;
- an operating member for operating the shut-off element between the open position and the close position;
- an anti-rotation device comprising:
   - an anti-rotation element secured to the shut-off element and configured to prevent the shut-off element from rotating around the translation axis within the internal chamber;
   - a guiding assembly comprising:
      - a guide slidably mounted on the anti-rotation element along a guiding axis parallel to the translation axis, and
      - a securing element configured to occupy a first configuration in which the securing element allows a movement of the guiding assembly relative to the stationary body in a plane perpendicular to the translation axis, and a second configuration in which the securing element is secured to the stationary body and prevents the movement of the guiding assembly relative to the stationary body in the plane perpendicular to the translation axis.

By the provision of the anti-rotation device, the advantage is that the shut-off element can only move in translation along the translation axis, and thus cannot rotate around the translation axis, when the securing element of the anti-rotation device is secured to the stationary body (i.e. when the securing element occupies the second configuration). In other words, the shut-off element can thus be maintained in the desired angular positions during both the production process (i.e. when the shut-off element is in the open position) and the cleaning process (i.e. when the shut-off element is in the close position).

When the securing element occupies the first configuration, the securing element not only allows a movement of the guiding assembly, but also a movement of the anti-rotation element, relative to the stationary body in a plane perpendicular to the translation axis.

Therefore, another advantage of the valve provided by the present invention is that when the securing element is not secured to the stationary body (i.e. when the securing element occupies the first configuration), not only the shut-off element is able to slightly rotate around the translation axis, but also the anti-rotation device is able to move relatively to the stationary body in a plane perpendicular to the translation axis. This feature facilitates the assembly of the valve by helping to get a correct and stable positioning of the shut-off element within the internal chamber of the stationary body.

Also, disassembly of the anti-rotation device is possible, which allows maintenance of the valve.

Further advantages and advantageous features of the invention are disclosed in the following description.

According to one possibility, the first pipe and the second pipe are liquid-conveying pipes.

According to one embodiment of the invention, the stationary body comprises a first connection passage for connecting to the first pipe. According to this possibility, the internal chamber of the stationary body communicates with the first pipe through the first connection passage.

According to one possibility, the internal chamber includes a fluid connection opening provided on the stationary body and configured to fluidly connect the first connection passages and the second pipe, the shut-off element being configured to tightly close the fluid connection opening when the shut-off element is in the close position.

According to one possibility, the first connection passage can accommodate at least one scraper intended to sweep an internal wall of the first connection passage and put the liquid downstream.

According to one possibility, the shut-off element is configured such that, when the shut-off element is in the close position, a scraper accommodated in the first pipe can move freely along the first connection passage.

According to one possibility, the shut-off element is configured such that, when the shut-off element is in the close position, an additional scraper accommodated in the second pipe can move freely along the second pipe.

According to one possibility, the shut-off element is configured to act as a stop for the scraper accommodated in the first pipe when the shut-off element is in the open position.

According to one embodiment of the invention, the stationary body comprises a second connection passage for connecting to the second pipe. According to this possibility, the internal chamber of the stationary body communicates with the second pipe through the second connection passage.

According to one possibility, the first connection passage has a first passage axis and the second connection passage has a second passage axis which are angularly offset, and for example substantially orthogonal.

According to one possibility, the first and second connection passages extend in two separate planes which may for example be axially offset along the translation axis and which may both extend substantially perpendicularly to the translation axis.

According to one possibility, the translation axis is configured to extend substantially perpendicularly to the first passage axis and to the second passage axis.

According to one possibility, the first connection passage is situated above the second connection passage. According to this configuration, the open position of the valve allows all or part of a liquid flowing into the first pipe to go into the second pipe, while the close position of the valve prevents any liquid exchange between the first and the second pipe.

According to one possibility, the internal chamber includes a fluid connection opening provided on the stationary body and configured to fluidly connect the first and second connection passages, the shut-off element being configured to tightly close the fluid connection opening when the shut-off element is in the close position.

According to one possibility, at least one of the first and the second connection passages can accommodate at least one scraper intended to sweep an internal wall of the corresponding connection passages and put the liquid downstream.

According to one possibility, the shut-off element is configured such that, when the shut-off element is in the close position, an additional scraper accommodated in the second pipe can move freely along the second connection passage.

According to one possibility, the shut-off element has a cylindrical shape with a globally circular base and has a longitudinal central axis that is parallel to the translation axis. However, according to other embodiments of the invention, the shut-off element may have a cross section which is not circular but elliptical, square or rectangular, or more generally, polygonal.

According to one possibility, the longitudinal central axis of the shut-off element coincides with the translation axis.

According to one possibility, the internal chamber has a cylindrical shape with a circular base and extends along an extension axis that is parallel to the translation axis.

According to one possibility, the shut-off element is mounted within the internal chamber of the stationary body in a way that allows the shut-off element to move in translation along the translation axis.

According to one possibility, the shut-off element is mounted within the internal chamber of the stationary body in a way that allows the shut-off element to move in translation along the translation axis and to rotate around the translation axis.

According to one possibility, the shut-off element includes a through-orifice having a cross-section, and for example an internal diameter, that corresponds to the cross-section, and for example to the internal diameter, of the first connection passage.

According to one possibility, the shut-off element has, on its face that faces the second pipe, a protruding portion having an overall contour corresponding to the fluid connection opening provided on the stationary body and including an end part provided with a concave cylindrical profile with curvature that equals to that of the internal wall of the second pipe. According to this possibility, in the close position of the shut-off element corresponding to the close position of the valve, the protruding portion of the shut-off element provides a prolongation of the second pipe, i.e. closely follows the inside contour of the second pipe.

According to another possibility, the shut-off element has, on its face that faces the second connection passage, a protruding portion having an overall contour corresponding to the fluid connection opening provided on the stationary body and including an end part provided with a concave cylindrical profile with curvature that equals to that of the internal wall of the second connection passage. According to this possibility, in the close position of the shut-off element corresponding to the close position of the valve, the protruding portion of the shut-off element provides a prolongation of the second connection passage, i.e. closely follows the inside contour of the second connection passage.

According to one possibility, in the close position of the shut-off element corresponding to the close position of the valve, the through-orifice of the shut-off element coincides, i.e. is axially aligned, with the first connection passage.

In one embodiment, the valve further comprises an actuator configured to automatically actuate said operating member.

According to one possibility, the actuator comprises one of a pneumatic piston, a hydraulic piston, an electric piston.

According to another possibility, the actuator is intended to be manually operate.

In one embodiment, a space is provided between the actuator and the stationary body in order to arrange an access to at least one of the anti-rotation device and the operating member.

Thanks to this configuration, accessibility to the operating member and/or to the anti-rotation device is permitted, which provides for easier and more comfortable assembly, disassembly and maintenance of the valve.

In one embodiment, the anti-rotation element comprises an anti-rotation rod.

According to one possibility, the anti-rotation rod has a longitudinal axis which is substantially parallel to the translation axis.

According to one possibility, the anti-rotation rod has a threaded end which is screwed into a first tapped bore provided on the shut-off element.

According to other possibilities, the fixation of the anti-rotation rod to the shut-off element can be done by other means, like for example welding or press fitting.

In one embodiment, the stationary body comprises a base and a covering element which at least partially delimit the internal chamber.

Thanks to the covering element, at least some of the internal elements of the valve, and especially the shut-off element and at least part of the anti-rotation device, are protected.

According to one possibility, the covering element is a mounting plate. Advantageously, the mounting plate extends substantially perpendicularly to the translation axis.

In one embodiment, the covering element comprises a rod passage bore through which the anti-rotation rod protrudes out of the internal chamber.

Thanks to this configuration, an access is secured to one end of the anti-rotation rod without having to disassemble the valve.

According to one possibility, the guide is a guiding ring surrounding at least part of the anti-rotation rod. The guiding ring may include an annular holder and a self-lubricating annular pad secured to the annular holder and surrounding the anti-rotation rod.

According to one possibility, the guiding ring surrounds a protruding part of the anti-rotation rod which protrudes out of the internal chamber.

According to one possibility, the securing element is configured to secure the guide, and for example the annular holder, to the stationary body, and for example to the covering element of the stationary body, when the securing element is in the second configuration.

According to one possibility, the securing element comprises at least one securing screw.

In one embodiment, the diameter of the rod passage bore is larger than the diameter of the anti-rotation rod.

Thanks to this configuration, a mechanical play of the anti-rotation rod is allowed with respect to the anti-rotation rod bore of the covering element.

In other words, the anti-rotation device of the valve does not introduce additional mechanical constraint that could quickly deteriorates the valve which could jerk and/or vibrate during its translation movement.

This allows to reduce constraints within the valve, improves its flexibility and generally helps to increase its life duration.

According to one possibility, the value of a mechanical play between the anti-rotation rod and the rod passage bore is between 0.016 mm and 0.061 mm.

In one embodiment, the operating member comprises a piston shaft, the covering element of the stationary body further comprising a shaft passage bore through which the piston shaft protrudes out of the internal chamber.

Thanks to this configuration, an access is secured to one end of the piston shaft in order to connect or disconnect the piston shaft to the actuator.

According to one possibility, the piston shaft has a longitudinal axis which coincides with the translation axis.

According to one possibility, the piston shaft has at least one threaded end which is screwed into a second tapped bore provided on the shut-off element.

In one embodiment, the diameter of the shaft passage bore is greater than the diameter of the piston shaft.

Thanks to this configuration, a mechanical play of the piston shaft is allowed with respect to the piston shaft bore of the covering element.

Thanks to this provision, the piston shaft and the covering element configuration does not introduce additional mechanical constraint that could reduce the life duration of the valve.

According to one possibility, the value of a mechanical play between the piston shaft and the shaft passage bore is between 1.800 mm and 2.252 mm.

According to a second aspect, a second object of the invention relates to an assembly process of the valve, said assembly process comprising the following steps:
- connecting the operating member (5) to the shut-off element (3);
- connecting the anti-rotation element (7) to the shut-off element (3);
- positioning the shut-off element (3) into the internal chamber (23) of the stationary body (2);
- mounting the guide (6) onto the anti-rotation element (7);
- moving the shut-off element (3) between the open position and close position;
- securing the securing element onto the stationary body (2).

According to one possibility, the step of connecting the operating member to the shut-off element is done by screwing a threaded end of the operating member into a first tapped bore provided on the shut-off element.

According to one possibility, the step of connecting the anti-rotation element to the shut-off element is done by screwing a threaded end of the anti-rotation element into a second tapped bore provided on the shut-off element.

According to one possibility, the step of moving the shut-off element between the open and close position is done several times in order to correctly position the shut-off element into the internal chamber of the stationary body.

According to one possibility, the assembly process comprises a step of securing the covering element onto the base of the stationary body in a way that the piston shaft crosses the piston shaft bore and that the anti-rotation rod crosses the anti-rotation rod bore.

It goes without saying that the different aspects of the invention defined above, not incompatible between them, can be combined.

The invention will be better understood with the aid of the detailed description that is set out below with reference to the appended drawing.

### Brief description of the drawings

With reference to the appended drawings, below follows a more detailed description of a preferred embodiment of the invention cited as an example.

In the drawings:
[Fig.1] is a general view of a valve according to one embodiment of the invention.
[Fig.2] is a partial exploded view of a valve according to a second embodiment of the invention.
[Fig.3] is a view in perspective of the valve with the shut-off element in the close position.
[Fig.4] is a sectional view of the valve with the shut-off element in the close position.
[Fig.5] is a sectional view of the valve with the shut-off element in the open position.
[Fig.6] is a sectional view of the valve with a focus on the anti-rotation device.
[Fig.7] is a sectional view of the anti-rotation device.
[Fig.8] is a detailed exploded view of the guide.
[Fig.9] is a partial sectional view of the shut-off element.
[Fig.10] is a partial exploded view of the valve with a focus on the shut-off element.
[Fig.11] is a partial exploded view of the valve with a focus on the covering element of the stationary body.
[Fig.12] is a partial exploded view of the valve with a focus on the assembly of the covering element on the stationary body.

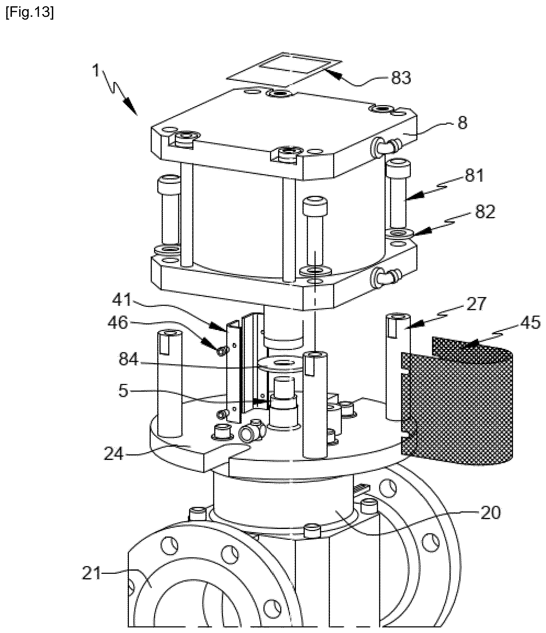

[Fig.13] is an exploded view of the valve.

### Detailed description of example embodiments of the invention

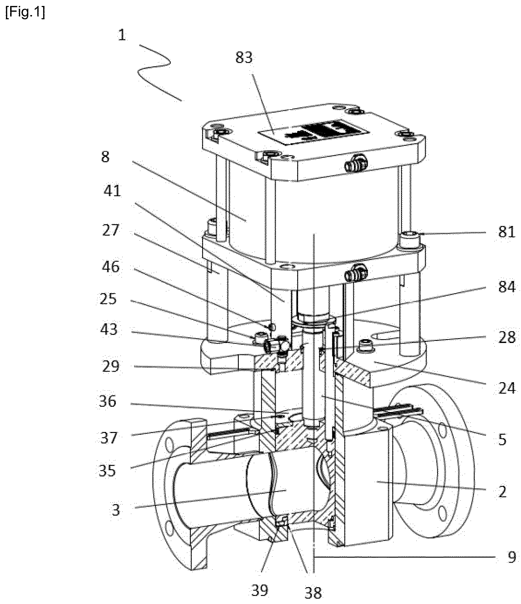

Figure 1 represents a valve 1 that includes a stationary body 2 comprising a first connection passage 21 for connecting to a first pipe and an internal chamber 23 communicating with the first connection passage 21 and with the second pipe.

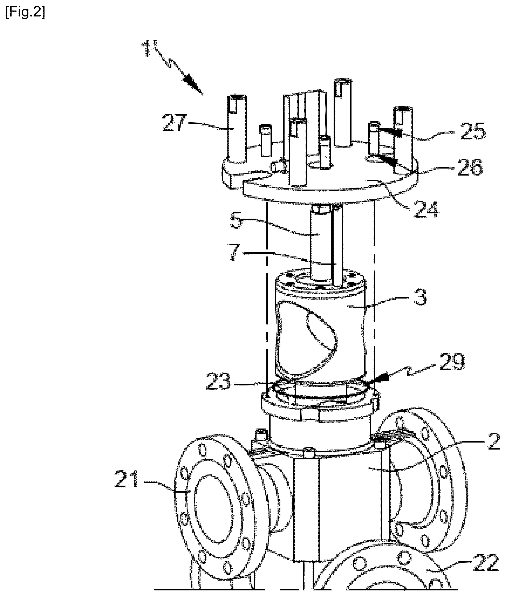

Figure 2 represents a valve 1' that includes a stationary body 2 comprising a first connection passage 21 for connecting to a first pipe, a second connection passage 22 for connecting to a second pipe and an internal chamber 23 communicating with the first connection passage 21 and with the second connection passage 22.

Said first pipe and second pipe are not represented on the drawings. The only difference between the valve 1 and the valve 1' is that the stationary body 2' of the valve comprises the second connection passage 22, while in the valve 1 the internal chamber 23 is directly connected to the second pipe. Apart from this difference, the valve 1 and the valve 1' are structurally and functionally similar.

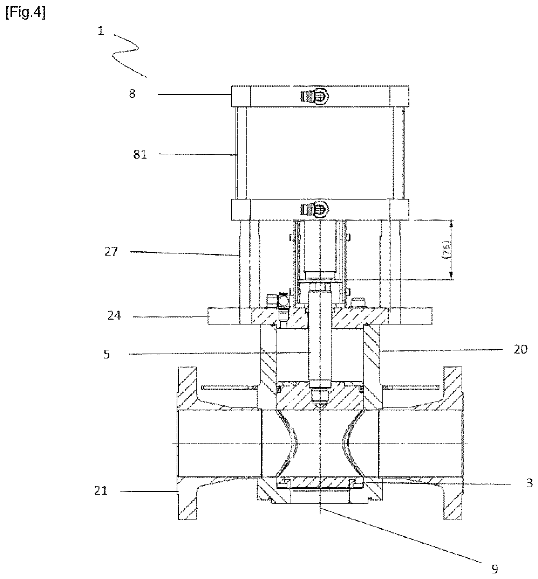

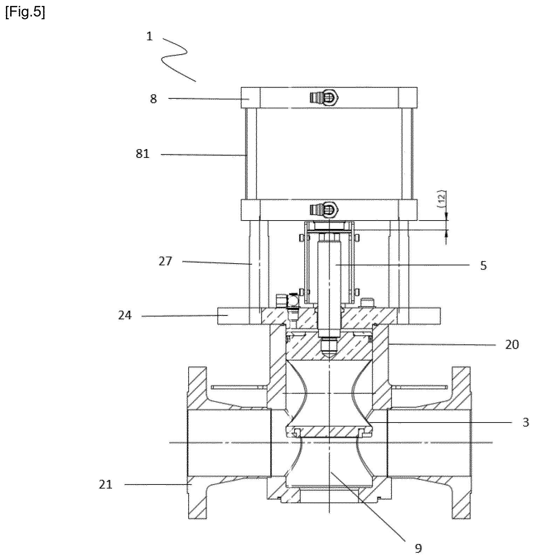

The valve 1 also comprises a shut-off element 3 housed into the stationary body 2. The shut-off element 3 is movable in translation along a translation axis 9 between an open position of the shut-off element 3 (visible on figure 5) and a close position of the shut-off element 3 (visible on figure 4).

The open position of the shut-off element 3 corresponds to an open position of the valve 1 wherein the first pipe and the second pipe are in communication through the internal chamber 23.

The close position of the shut-off element 3 corresponds to a close position of the valve 1 wherein the first pipe and the second pipe are not in communication through the internal chamber 23.

The valve 1 comprises an operating member 5 intended to operate the shut-off element 3 between the open position of the shut-off element 3 and the close position of the shut-off element 3.

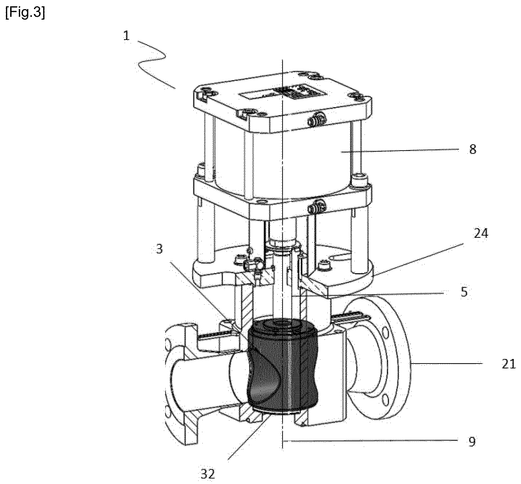

As shown for example on figure 2, the internal chamber 23 has a cylindrical shape with a circular base and extends along an extension axis that is parallel to the translation axis 9. As shown on figures 2 and 3, the shut-off element 3 is slidably mounted within the internal chamber 23.

The shut-off element 3 has a cylindrical shape with a globally circular base and has a longitudinal central axis that is parallel to the translation axis 9.

The shut-off element 3 includes a through-orifice 31 having an internal diameter that corresponds to the internal diameter of the first connection passage 21.

In the close position of the shut-off element 3 corresponding to the close position of the valve 1, the through-orifice 31 of the shut-off element coincides, i.e. is axially aligned, with the first connection passage 21.

In the embodiment of figure 1, the shut-off element 3 has, on its face that faces the second pipe, a protruding portion 32 having an overall contour corresponding to the fluid connection opening provided on the stationary body 2 and including an end part provided with a concave cylindrical profile with curvature that equals to that of the internal wall of the second pipe. In the close position of the shut-off element 3 corresponding to the close position of the valve 1, the protruding portion 32 of the shut-off element 3 provides a prolongation of the second pipe, i.e. closely follows the inside contour of the second pipe.

In the embodiment of figure 2, the shut-off element 3 has, on its face that faces the second connection passage 22, a protruding portion 32 having an overall contour corresponding to the fluid connection opening provided on the stationary body 2 and including an end part provided with a concave cylindrical profile with curvature that equals to that of the internal wall of the second connection passage 22. In the close position of the shut-off element 3 corresponding to the close position of the valve 1, the protruding portion 32 of the shut-off element 3 provides a prolongation of the second connection passage 22, i.e. closely follows the inside contour of the second connection passage 22.

The stationary body 2 further comprises a base 20 and a covering element 24 which partially delimits the internal chamber 23 of the stationary body 2.

The valve 1 further comprises an anti-rotation device intended to prevent the shut-off element 5 to rotate around the translation axis 9.

The anti-rotation device comprises an anti-rotation element 7 secured on the shut-off element 3 and a guiding assembly comprising a guide 6 slidably mounted on the anti-rotation element 7 along a guiding axis 11 parallel to the translation axis 9.

The anti-rotation device further comprises a securing element 64 intended to allow, in a first configuration, a movement of the guiding assembly, and thus of the anti-rotation element 7 relative to the stationary body 2 in a plane perpendicular to the translation axis 9, and to prevent such a movement in a second configuration.

In the illustrated embodiment, the anti-rotation element 7 is a anti-rotation rod, and the covering element 24 comprises a rod passage bore 12 through with the anti-rotation rod protrudes out of the internal chamber 23.

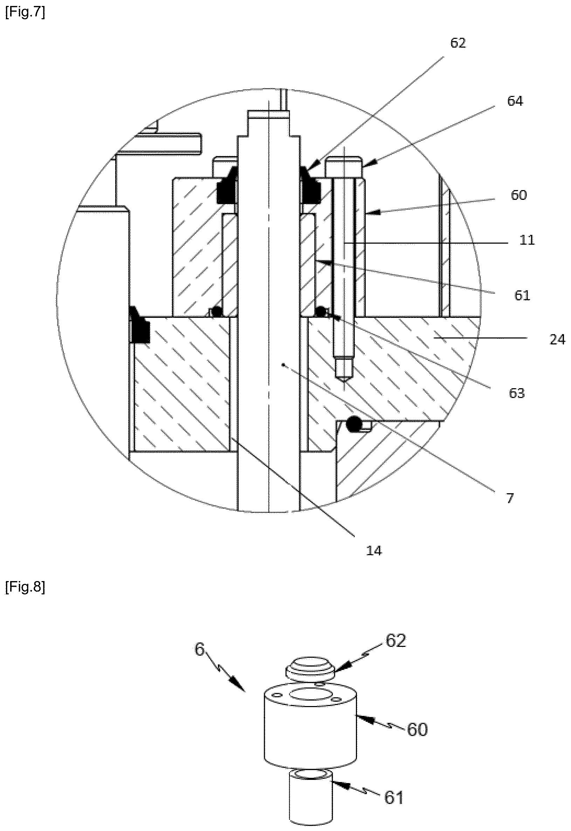

As can be seen on figure 7, a mechanical play 14 is provided between the anti-rotation rod and the rod passage bore 12. In other terms, the diameter of the rod passage bore 12 is larger than the diameter of the anti-rotation rod.

In the illustrated embodiment, the operating member 5 is a piston shaft, and the covering element 24 comprises a shaft passage bore 13 through which the piston shaft protrudes out of the internal chamber 23.

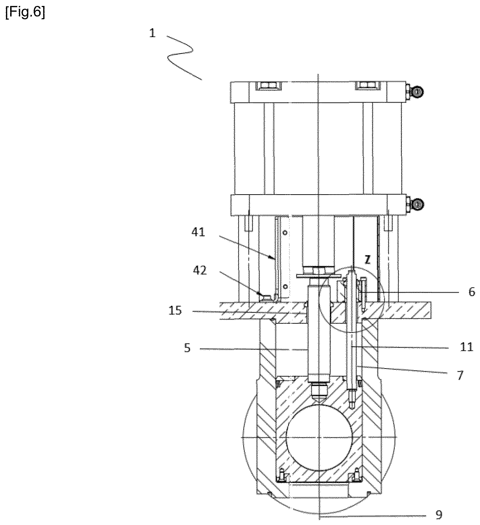

As can be seen on figure 6, a mechanical play 15 is provided between the piston shaft and the shaft passage bore 13. In other terms, the diameter of the shaft passage bore 13 is larger than the diameter of the piston shaft.

The valve 1 comprises also an actuator 8 configured to automatically actuate the operating member 5. The actuator 8 and the covering element 24 of the stationary body 2 are offset along the translation axis 9. Thanks to this configuration, a space is provided between the actuator 8 and the stationary body 2, thanks to what at least part of the anti-rotation device and at least part of the operating member 5 are comfortably accessible.

As shown on figure 8, the guide 6 is a guiding ring intended to surround at least part of the anti-rotation rod. The guiding ring comprises an annular holder 60 and a self-lubricating annular pad 61 secured to the annular holder 60 and intended to surround part of the anti-rotation rod. The guide 6 also comprises a wiper seal 62 mounted onto the annular holder 60.

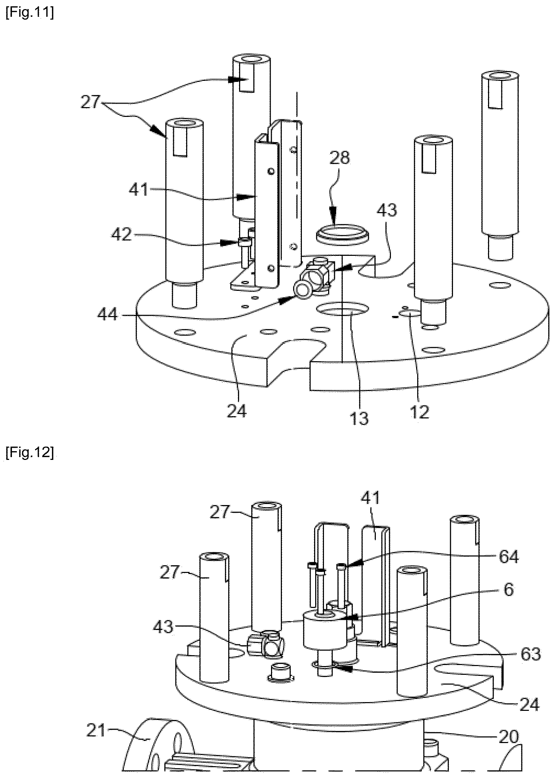

In the illustrated embodiments, the securing element 64 comprises three securing screws (visible on figure 12). As shown on figure 7, the guide 6 is secured to the covering element 24 of the stationary body 2 by means of said three securing screws.

An assembly process of the valve 1 will now be described.

### Shut-off element assembly

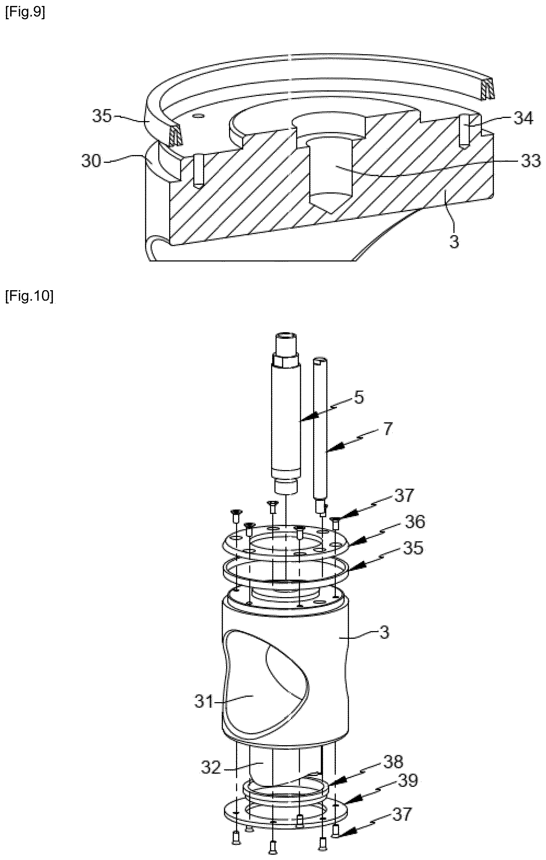

In a step of connecting the anti-rotation element 7 to the shut-off element 3, a threaded end of the anti-rotation rod is screwed into a first tapped bore 34 provided on the shut-off element 3 (visible on figure 9).

In a step of connecting the operating member 5 to the shut-off element 3, a threaded end of the piston shaft is screwed into a second tapped bore 33 provided on the shut-off element (visible on figure 9).

As illustrated on figures 9 and 10, a piston seal 35 is appropriately mounted on a stop 30 of the shut-off element 3.

As shown on figure 10, a piston washer 36 is put on top of the piston seal 35, and is secured to the shut-off element 3 by screwing six screws 37. Thanks to the screws 37, both the piston washer 36 and the piston seal 35 are fixed to the shut-off element 3.

A facial seal 38 is set on the shut-off element 3, and is subsequently covered with a lower piston washer 39. The lower piston washer 39 is then secured to the shut-off element 3 by screwing six screws 37. Thanks to the screws 37, both the lower piston washer 39 and the facial seal 38 are fixed to the shut-off element 3.

### Ring assembly

As shown on figure 8, the assembly of the ring 6 is done by mounting the self-lubricating pad 61 in the anti-rotation holder 60, by means for example of a hydraulic press, and by mounting the wiper seal 62, previously greased, on the anti-rotation holder 60.

### Covering element assembly

As shown on figure 11, a wiper seal 28, previously greased, is mounted on the covering element 24 of the stationary body 2. A muffler 44 is screwed in a rotating elbow fitting 43, and said rotating elbow fitting 43 is then secured to the covering element 24 by screwing. An actuator sensor support 41 is assembled onto the covering element 24 by means of screws 42. Four columns 27 are then attached onto the covering element 24 by screwing their respective threaded end into four respective tapped bore provided on the covering element 24. Thanks to these columns 27, a space is accommodated between the covering element 24 and the actuator 8.

After the anti-rotation rod and the piston shaft are greased, the shut-off element is put into the internal chamber 23 of the stationary body 2. A first O' ring 29, previously greased, is placed in a groove provided on the base 20 of the stationary body 2. The covering element 24 is placed on the base 20 of the stationary body 2, and then screwed by means of washers 26 and screws 25.

A second O' ring 63, previously greased, is placed around part of the anti-rotation rod that protrudes out of the internal chamber 23 in order to be at the base of the guide 6. The guide 6 is then slidably mounted on and around the anti-rotation rod. The three screws 64 are then loosely screwed in order to allow a movement of the guide 6, and especially a movement relative to the stationary body 2 in a plane perpendicular to the translation axis 9. Thanks to this provision, the anti-rotation rod is also able to move freely, which means that the shut-off element 3 can still rotate in order to be placed in a correct position by means of moving it between its open and its close position.

### Actuator assembly

A detection washer 84 is put on the piston shaft. A cylinder rod of the actuator 8 is then screwed on the piston shaft. The actuator 8 is adequately placed on the columns 27, and then attached to the columns 27 by means of screws 81 and washer 82. The three screws 64 are then fully tighten on the guide 6. A safety grid 45 is then placed and fixed onto the actuator sensor support 41 by means of screws 46. Finally, an identification plate 83 is stuck on top of the actuator 8.

It is to be understood that the present invention is not limited to the embodiments described above and illustrated in the drawings; Rather, the skilled person will recognize that many changes and modifications may be made within the scope of the appended claims.

## Claims

1. A valve (1) for establishing communication between a first pipe and a second pipe, wherein a first pipe axis of the first pipe and a second pipe axis of the second pipe are offset, said valve comprising:
- a stationary body (2) comprising an internal chamber (23) communicating with the first pipe and with the second pipe;
- a shut-off element (3) slidably mounted within the internal chamber (23) of the stationary body (2), the shut-off element (3) being movable in translation along a translation axis (9) between an open position corresponding to an open position of the valve (1) wherein the first pipe and the second pipe are in communication through the internal chamber (23) and a close position corresponding to a close position of the valve (1) wherein the first pipe and the second pipe are not in communication through the internal chamber (23);
- an operating member (5) for operating the shut-off element (3) between the open position and the close position;
- an anti-rotation device comprising:
∘ an anti-rotation element (7) secured to the shut-off element (3) and configured to prevent the shut-off element (3) from rotating around the translation axis (9) within the internal chamber (23);
∘ a guiding assembly comprising:
▪ a guide (6) slidably mounted on the anti-rotation element (7) along a guiding axis (11) parallel to the translation axis (9), and
▪ a securing element (64) configured to occupy a first configuration in which the securing element (64) allows a movement of the guiding assembly relative to the stationary body (2) in a plane perpendicular to the translation axis (9),
**characterized in that**
the securing element (64) is also configured to occupy a second configuration in which the securing element (64) is secured to the stationary body (2) and prevents the movement of the guiding assembly relative to the stationary body (2) in the plane perpendicular to the translation axis (9).

2. The valve (1) according to claim 1, further comprising an actuator (8) configured to automatically actuate said operating member (5).

3. The valve (1) according to claim 2, wherein a space is provided between the actuator (8) and the stationary body (2) in order to arrange an access to at least one of the anti-rotation device and the operating member (5).

4. The valve (1) according to any one of the preceding claims, wherein the anti-rotation element (7) comprises an anti-rotation rod.

5. The valve (1) according to any one of the preceding claims, wherein the stationary body (2) comprises a base (20) and a covering element (24) which at least partially delimit the internal chamber (23).

6. The valve according to claim 4 and claim 5, wherein the covering element (24) comprises a rod passage bore (12) through which the anti-rotation rod protrudes out of the internal chamber (23).

7. The valve (1) according to claim 6, wherein the diameter of the rod passage bore (12) is larger than the diameter of the anti-rotation rod.

8. The valve (1) according to claim 5 to 7, wherein the operating member (5) comprises a piston shaft, the covering element (24) of the stationary body (2) further comprising a shaft passage bore (13) through which the piston shaft protrudes out of the internal chamber (23).

9. The valve (1) according to claim 8, wherein the diameter of the shaft passage bore (13) is greater than the diameter of the piston shaft.

10. An assembly process of the valve (1) of any one of the preceding claims, the assembly process comprising the following steps:
- connecting the operating member (5) to the shut-off element (3);
- connecting the anti-rotation element (7) to the shut-off element (3);
- positioning the shut-off element (3) into the internal chamber (23) of the stationary body (2);
- mounting the guide (6) onto the anti-rotation element (7);
- moving the shut-off element (3) between the open position and close position;
- securing the securing element onto the stationary body (2).

## Patentansprüche

1. Ventil (1) zum Herstellen einer Verbindung zwischen einem ersten Rohr und einem zweiten Rohr, wobei eine erste Rohrachse des ersten Rohrs und eine zweite Rohrachse des zweiten Rohrs versetzt sind, wobei das Ventil Folgendes umfasst:
- einen stationären Körper (2), der eine Innenkammer (23) umfasst, die mit dem ersten Rohr und mit dem zweiten Rohr in Verbindung steht;
- ein Absperrelement (3), das in der Innenkammer (23) des stationären Körpers (2) verschiebbar befestigt ist, wobei das Absperrelement (3) translatorisch entlang einer Translationsachse (9) zwischen einer geöffneten Stellung, die einer geöffneten Stellung des Ventils (1) entspricht, in der das erste Rohr und das zweite Rohr durch die Innenkammer (23) in Verbindung stehen, und einer geschlossenen Stellung, die einer geschlossenen Stellung des Ventils (1) entspricht, in der das erste Rohr und das zweite Rohr nicht durch die Innenkammer (23) in Verbindung stehen, beweglich ist;
- ein Betätigungsglied (5) zum Betätigen des Absperrelements (3) zwischen der geöffneten Stellung und der geschlossenen Stellung;
- eine Verdrehsicherungsvorrichtung, die Folgendes umfasst:
∘ ein Verdrehsicherungselement (7), das an dem Absperrelement (3) gesichert und dazu konfiguriert ist, zu verhindern, dass sich das Absperrelement (3) um die Translationsachse (9) innerhalb der Innenkammer (23) dreht;
∘ eine Führungsanordnung, die Folgendes umfasst:
▪ eine Führung (6), die entlang einer zur Translationsachse (9) parallelen Führungsachse (11) verschiebbar an dem Verdrehsicherungselement (7) befestigt ist, und
▪ ein Sicherungselement (64), das dazu konfiguriert ist, eine erste Konfiguration einzunehmen, in der das Sicherungselement (64) eine Bewegung der Führungsanordnung bezüglich des stationären Körpers (2) in einer senkrecht zur Translationsachse (9) verlaufenden Ebene gestattet, **dadurch gekennzeichnet, dass**
das Sicherungselement (64) auch dazu konfiguriert ist, eine zweite Konfiguration einzunehmen, in der das Sicherungselement (64) an dem stationären Körper (2) gesichert ist und die Bewegung der Führungsanordnung bezüglich des stationären Körpers (2) in der senkrecht zu der Translationsachse (9) verlaufenden Ebene verhindert.

2. Ventil (1) nach Anspruch 1, das ferner einen Aktuator (8) umfasst, der dazu konfiguriert ist, das Betätigungsglied (5) automatisch zu aktivieren.

3. Ventil (1) nach Anspruch 2, wobei ein Zwischenraum zwischen dem Aktuator (8) und dem stationären Körper (2) vorgesehen ist, um Zugang zu der Verdrehsicherungsvorrichtung und/oder dem Betätigungsglied (5) bereitzustellen.

4. Ventil (1) nach einem der vorhergehenden Ansprüche, wobei das Verdrehsicherungselement (7) eine Verdrehsicherungsstange umfasst.

5. Ventil (1) nach einem der vorhergehenden Ansprüche, wobei der stationäre Körper (2) eine Basis (20) und ein Abdeckelement (24) umfasst, die die Innenkammer (23) zumindest zum Teil begrenzen.

6. Ventil nach Anspruch 4 und Anspruch 5, wobei das Abdeckelement (24) eine Stangendurchgangsbohrung (12) umfasst, durch die die Verdrehsicherungsstange aus der Innenkammer (23) vorragt.

7. Ventil (1) nach Anspruch 6, wobei der Durchmesser der Stangendurchgangsbohrung (12) größer als der Durchmesser der Verdrehsicherungsstange ist.

8. Ventil (1) nach Anspruch 5 bis 7, wobei das Betätigungsglied (5) eine Kolbenwelle umfasst, wobei das Abdeckelement (24) des stationären Körpers (2) ferner eine Wellendurchgangsbohrung (13) umfasst, durch die die Kolbenwelle aus der Innenkammer (23) vorragt.

9. Ventil (1) nach Anspruch 8, wobei der Durchmesser der Wellendurchgangsbohrung (13) größer als der Durchmesser der Kolbenwelle ist.

10. Montageprozess des Ventils (1) nach einem der vorhergehenden Ansprüche, wobei der Montageprozess die folgenden Schritte umfasst:
- Verbinden des Betätigungsglieds (5) mit dem Absperrelement (3);
- Verbinden des Verdrehsicherungselements (7) mit dem Absperrelement (3);
- Positionieren des Absperrelements (3) in der Innenkammer (23) des stationären Körpers (2);
- Befestigen der Führung (6) an dem Verdrehsicherungselement (7);
- Bewegen des Absperrelements (3) zwischen der geöffneten Stellung und der geschlossenen Stellung;
- Sichern des Sicherungselements an dem stationären Körper (2).

## Revendications

1. Soupape (1) destinée à établir une communication entre un premier conduit et un second conduit, un premier axe de conduit du premier conduit et un second axe de conduit du second conduit étant décalés, ladite soupape comprenant :
- un corps fixe (2) comprenant une chambre interne (23) communiquant avec le premier conduit et avec le second conduit ;
- un élément obturateur (3) monté coulissant dans la chambre interne (23) du corps fixe (2), l'élément obturateur (3) étant mobile en translation selon un axe de translation (9) entre une position d'ouverture correspondant à une position d'ouverture de la soupape (1) dans laquelle le premier conduit et le second conduit sont en communication à travers la chambre interne (23) et une position de fermeture correspondant à une position de fermeture de la soupape (1) dans laquelle le premier conduit et le second conduit ne sont pas en communication à travers la chambre interne (23) ;
- un élément d'actionnement (5) destiné à actionner l'élément obturateur (3) entre la position d'ouverture et la position de fermeture ;
- un dispositif anti-rotation comprenant :
∘ un élément anti-rotation (7) solidement fixé à l'élément obturateur (3) et conçu pour empêcher l'élément obturateur (3) de tourner autour de l'axe de translation (9) au sein de la chambre interne (23) ;
∘ un ensemble de guidage comprenant :
▪ un guide (6) monté coulissant sur l'élément anti-rotation (7) selon un axe de guidage (11) parallèle à l'axe de translation (9), et
▪ un élément de fixation (64) conçu pour occuper une première configuration dans laquelle l'élément de fixation (64) autorise un déplacement de l'ensemble de guidage par rapport au corps fixe (2) dans un plan perpendiculaire à l'axe de translation (9),
**caractérisée en ce que**
l'élément de fixation (64) est également conçu pour occuper une seconde configuration dans laquelle l'élément de fixation (64) est solidement fixé au corps fixe (2) et empêche le mouvement de l'ensemble de guidage par rapport au corps fixe (2) dans le plan perpendiculaire à l'axe de translation (9).

2. Soupape (1) selon la revendication 1, comprenant en outre un actionneur (8) conçu pour actionner automatiquement ledit élément d'actionnement (5).

3. Soupape (1) selon la revendication 2, un espace étant prévu entre l'actionneur (8) et le corps fixe (2) afin d'agencer un accès à au moins l'un parmi le dispositif anti-rotation et l'élément d'actionnement (5).

4. Soupape (1) selon l'une quelconque des revendications précédentes, l'élément anti-rotation (7) comprenant une tige anti-rotation.

5. Soupape (1) selon l'une quelconque des revendications précédentes, le corps fixe (2) comprenant une base (20) et un élément de recouvrement (24) qui délimitent au moins partiellement la chambre interne (23).

6. Soupape selon la revendication 4 et la revendication 5, l'élément de recouvrement (24) comprenant un alésage de passage de tige (12) à travers lequel la tige anti-rotation fait saillie hors de la chambre interne (23).

7. Soupape (1) selon la revendication 6, le diamètre de l'alésage de passage de tige (12) étant supérieur au diamètre de la tige anti-rotation.

8. Soupape (1) selon les revendications 5 à 7, l'élément d'actionnement (5) comprenant une tige de piston, l'élément de recouvrement (24) du corps fixe (2) comprenant en outre un alésage de passage d'arbre (13) à travers lequel la tige de piston fait saillie hors de la chambre interne (23).

9. Soupape (1) selon la revendication 8, le diamètre de l'alésage de passage d'arbre (13) étant supérieur au diamètre de l'arbre de piston.

10. Procédé d'assemblage de la soupape (1) selon l'une quelconque des revendications précédentes, le procédé d'assemblage comprenant les étapes consistant à :
- relier l'élément d'actionnement (5) à l'élément obturateur (3) ;
- relier l'élément anti-rotation (7) à l'élément obturateur (3) ;
- positionner l'élément obturateur (3) dans la chambre interne (23) du corps fixe (2) ;
- monter le guide (6) sur l'élément anti-rotation (7) ;
- déplacer l'élément obturateur (3) entre la position d'ouverture et la position de fermeture ;
- fixer solidement l'élément de fixation sur le corps fixe (2).
